# EUROPEAN PATENT APPLICATION

(11) **EP 1 385 039 A1**
(43) Date of publication of application: **28.01.2004**
(21) Application number: 01921775.1
(22) Date of filing: 28.03.2001
(51) Int. Cl.: G02F 1/09

(54) **VARIABLE OPTICAL EQUALIZER AND MULTIPLEXED OPTICAL TRANSMISSION SYSTEM**

(71) Applicant: FDK Corporation, Minato-ku, Tokyo 105-0004 (JP)
(72) Inventor: MASUDA, Akihiro, c/o FDK CORPORATION, Tokyo 105-0004 (JP); ABE, Shohei, c/o FDK CORPORATION, Tokyo 105-0004 (JP); GOTO, Mototsugu, c/o FDK CORPORATION, Tokyo 105-0004 (JP); MATSUNO, Takeshi, c/o FDK CORPORATION, Tokyo 105-0004 (JP)
(74) Representative: Charlton, Peter John
(86) International application number: PCT/JP2001/002579
(87) International publication number: WO 2002/079865

(57) **Abstract**

Transmission characteristics of a multiplicity of light signals each having a different frequency are compensated for simply and at a high accuracy by use of a single type of or a few types of variable optical equalizers, thereby enabling an optical multiplex transmission system having excellent transmission band characteristics to be implemented. Variable Faraday rotators 51, 52 and a polarization dependent element 6 are disposed on an optic axis (Z-axis) extending between an input-side fiber collimator 21 for emitting in the form of a beam signal light transmitted over an optical fiber land an output-side fiber collimator 22 for causing the optical fiber 1 to transmit the signal light input in the form of a beam.

## Description

### TECHNICAL FIELD

The present invention relates to a variable optical equalizer used in the field of optical communications and an optical multiplex transmission system using the optical equalizer, and for example to ones effective for use in gain deviation compensations of optical amplifiers in a DWDM (Dense Wavelength Division Multiplexing) transmission system.

### BACKGROUND ART

In the DWDM transmission system for example, it is typically carried out to combine a multiplicity of light signals each having a slightly different wavelength and to transmit it over a single optical fiber. It is also carried out therein to divide on a frequency-by-frequency basis DWDM signal light transmitted over the single optical fiber, for respective optical amplifications, and thereafter to recombine them into the DWDM signal light for transmission over the single optical fiber.

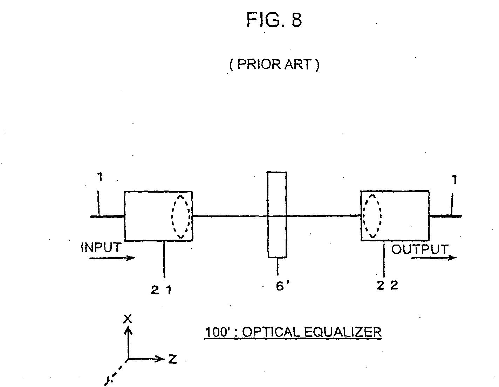

In order to ensure that the signals having different wavelengths are properly transmitted or received at respective predetermined signal levels, the DWDM transmission system needs imparting evenness to the transmission characteristics or transmission gain characteristics at their respective wavelengths, i.e., flattening the transmission bands of all the DWDM lights. In view of the optical amplifiers' wavelength-based characteristic differences and their individual characteristic variances for example, it is actually difficult to initially even the transmission characteristics of a multiplicity of light signals having different wavelengths. Thus, the inventors discussed to compensate for the DWDM signal light transmission characteristics on a wavelength-by-wavelength basis using an optical equalizer as shown in Fig. 8.

Fig. 8 shows the schematic configuration of the conventional optical equalizer whose use was discussed by the inventors. The optical equalizer designated generally at 100' in Fig. 8 is designed to be interposed, for use, in an optical fiber 1 forming an optical transmission line. The optical equalizer 100' includes an optical filter 6' for gain equalization intervening between an input-side fiber collimator 21 and an output-side fiber collimator 22. The optical filter 6' provides a control of the transmission characteristics of light signals having specific wavelengths. This optical equalizer 100' is disposed for each wavelength so that the transmission characteristics of the multiple light signals having different wavelengths can be compensated for on a wavelength-by-wavelength basis to thereby enable the transmission bands of all the DWDM light signals to be flattened.

The compensation characteristics of the conventional optical equalizer shown in Fig. 8 depend on the transmission characteristics of the optical filter 6' used therein. To compensate for the transmission characteristics of the multiple light signals having different wavelengths, various types of optical filters 6' each having difference transmission characteristic are needed for each wavelength. For this reason, if the above compensation is attempted to properly be carried out in the DWDM transmission system having an especially increased frequency division count, such an inconvenience may occur that different types of numerous optical equalizers 100' or optical filters 6' have to be prepared in advance. A countermeasure for alleviating this inconvenience is to reduce the number of types of the optical equalizers 100' or the optical filters 6'. In this instance, however, the compensation accuracy becomes lower.

The present invention was conceived in view of the above problems. It is therefore the object of the present invention to enable transmission characteristics of multiple light signals having different wavelengths to be compensated for simply and at a high accuracy.

### DISCLOSURE OF THE INVENTION

In order to achieve the above object, measures of the present invention provide a variable optical equalizer interposed in an optical fiber forming an optical transmission line, comprising an input-side fiber collimator which emits in the form of a beam signal light transmitted over the optical fiber; an output-side fiber collimator which causes the optical fiber to transmit the signal light input in the form of a beam; and a variable Faraday rotator and a polarization dependent element which are disposed on an optic axis extending between the input-side fiber collimator and the output-side fiber collimator. According to such measures, it becomes possible for the transmission characteristics of multiplicity of light signals each having a different wavelength to be compensated for simply and at a high accuracy by use of a single type of or a few types of variable optical equalizers.

In the above measures, the variable optical equalizer may further comprise a birefringent plate which separates by polarized wave a beam of light emitted from the input-side fiber collimator, into two beams of light; a λ/2 wave plate which causes the separated two beams of light to have the same direction of polarization for input to the polarization dependent element; a λ/2 wave plate which causes the direction of polarization of the two beams of light emitted from the polarization dependent element to be orthogonal to each other; and a birefringent plate which combines the two beams of light whose directions of polarization are caused to be orthogonal to each other, into a single beam of light for input to the output-side fiber collimator, whereby a polarization non-dependent variable optical equalizer can be formed. The variable Faraday rotator may be disposed both at the input and at the output of the polarization dependent element, whereby it is possible to increase the variable Faraday rotators-based transmission characteristics variable range, so-called dynamic range. In case of the polarization non-dependent optical equalizer, the λ /2 wave plate may intervene in the two beams of light separated by polarized wave, whereby the polarization-induced transmission differences can be reduced. The polarization dependent element may be a birefringent plate.

In an optical multiplex transmission system combining a multiplicity of light signals each having a different wavelength for transmission over a single optical fiber, the variable optical equalizer according to the above measures compensates for transmission characteristics of signal light on a wavelength-by-wavelength basis, thereby enabling an optical multiplex transmission system having excellent transmission band characteristics to be configured.

### BRIEF DESCRIPTION OF DRAWINGS

Figs. 1A and 1B are optical configuration diagrams showing a first embodiment of a variable optical equalizer in accordance with the present invention;
Figs. 2A to 2C are diagrams showing the light beam position and polarization status at respective sections (a to h planes) of the optical equalizer shown in Figs. 1A and 1B;
Fig. 3 is a schematic configuration diagram showing an embodiment of an optical multiplex transmissionsystem using the variable optical equalizer of the present invention;
Figs. 4A and 4B are optical configuration diagrams showing a second embodiment of the variable optical equalizer in accordance with the present invention;
Figs. 5A to 5D are diagrams showing the light beam position and polarization status at respective sections (a to h planes) of the optical equalizer shown in Figs. 4A and 4B;
Figs. 6A and 6B are optical configuration diagrams showing a third embodiment of the variable optical equalizer in accordance with the present invention;
Figs. 7A and 7B are diagrams showing the light beam position and polarization status at respective sections (a to d planes) of the optical equalizer shown in Figs. 6A and 6B; and
Fig. 8 is an optical configuration diagram of a conventional optical equalizer whose use was discussed by the inventors.

### BEST MODE FOR CARRYING OUT THE INVENTION

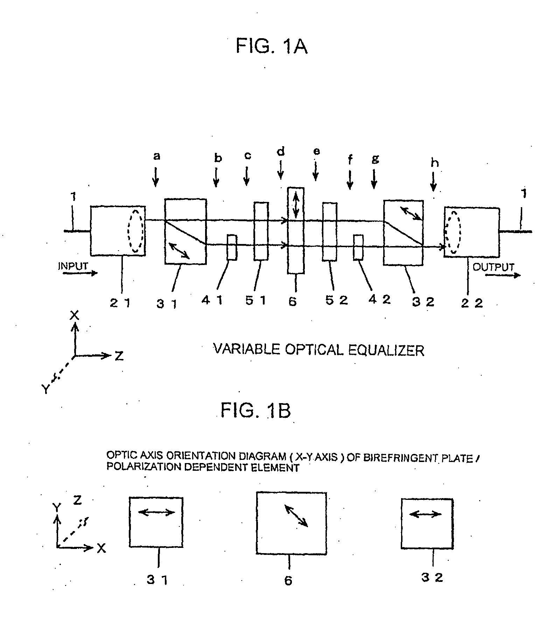

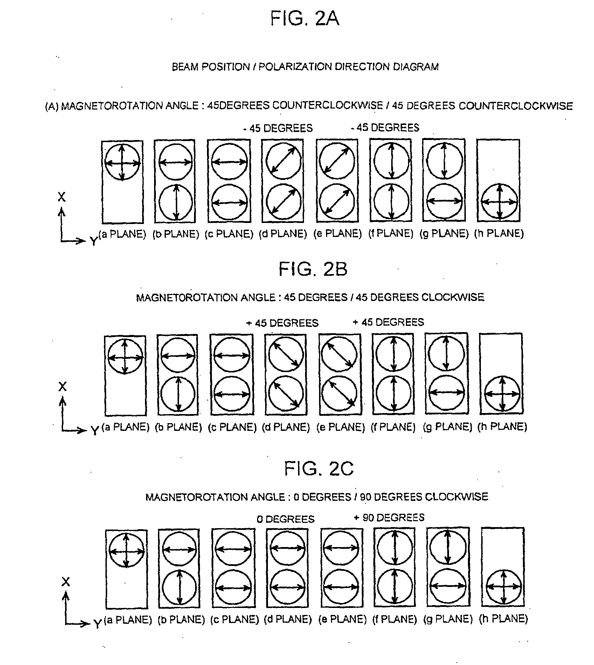

Figs . 1A and 1B show a first embodiment of a variable optical equalizer in accordance with the present invention, and Figs. 2A to 2C show the light beam position and polarization status at respective sections (a to h planes) of the optical equalizer shown in Figs. 1A and 1B.

The variable optical equalizer designated generally at 100 of the first embodiment is of polarization non-dependent type, and as shown in Fig. 1A includes fiber collimators 21 and 22 which are respectively disposed at its input side and output side to be interposed, for use, in an optical fiber 1 forming an optical transmission line. On an optic axis (Z-direction) extending between the input-side fiber collimator 21 and the output-side fiber collimator 22 are disposed in series a first birefringent plate 31, a first λ/2 wave plate 41, a first variable Faraday rotator 51, a polarization dependent element 6, a second variable Faraday rotator 52, a second λ/2 wave plate 42 and a second birefringent plate 32. A birefringent plate is used herein as the polarization dependent element 6. Fig. 1B shows the optic axis (X-Y axis) orientations of the above birefringent plates 31 and 32 and of the polarization dependent element (birefringent plate) 6.

Referring to Figs. 1A and 1B and Figs. 2A to 2C, signal light transmitted over the optical fiber 1 is emitted in the form of a beam in the optic axis direction (Z-axis direction) from the input-side fiber collimator 21 (a-plane). The emitted light beam passes through the first birefringent plate 31 to be separated into two light beams in the vertical (Y-direction) and horizontal (X-direction) polarization directions (b-plane). The separated two light beams (vertically polarized wave and horizontally polarized wave) are caused to have the same polarization direction (in Y-direction) by rotating only one beam (horizontally polarized wave) of the two light beams 90 degrees via the λ/2 wave plate 41 (c-plane). Both of the two light beams having the same polarization directions pass through the first variable Faraday rotator 51 (d-plane) and thereafter through the polarization dependent element 6 (e-plane). After having passed the polarization dependent element 6 (e-plane), the two light beams pass through the second variable Faraday rotator 52 (f-plane) and thereafter are caused to have orthogonal polarization directions by only one light beam 90 degrees via the λ/2 wave plate 42 (g-plane). Afterward, the two light beams are combined via the birefringent plate 32 into a single light beam (h-plane) to be input to the fiber collimator 22, again for transmission over the optical fiber 1.

Hereat, the above variable Faraday rotators 51 and 52 cause the planes of polarization of the passing light beams to be rotated by the magnetic field. In this case, the direction and magnitude of the rotation angle (magnetorotation angle) vary depending on the direction and strength of the above magnetic field. The optical transmission characteristics of the polarization dependent element 6 comprised of, e . g . , the birefringent plate varies depending on the polarizing angle of the light beams. Thus, in the case where the light beam (d-plane) whose plane of polarization has been rotated by the variable Faraday rotators 51 and 52 is passed through the polarization dependent element 6, the transmission characteristic of that light beam can arbitrarily be varied by the direction and/or the strength of the magnetic field.

In Figs. 2A to 2C, Fig. 2A shows the case where the polarization rotation angles (magnetorotation angles) of the two variable Faraday rotators 51 and 52 are both set to 45 degrees counterclockwise, Fig. 2B shows the case where the two polarization rotation angles are set to 45 degrees clockwise, and Fig. 2C shows the case where one rotation angle is set to zero with the other rotation angle being set to 90 degrees. Due to the polarization dependent characteristics of the polarization dependent element 6, different optical transmission characteristics can be obtained for respective statuses.

As set forth hereinabove, the polarization non-dependent variable optical equalizer 100 shown in Fig. 1A is capable of variably setting the light transmission characteristics by being interposed in the optical fiber 1 forming an optical transmission line. Use of this variable optical equalizer 100 to perform compensation for the signal light transmission characteristics enables optimum compensation conditions to variably be set at a high accuracy through the operation of the direction and/or the strength of the magnetic field. It is therefore possible to compensate for even transmission characteristics of a multiplicity of light signals having different wavelengths.

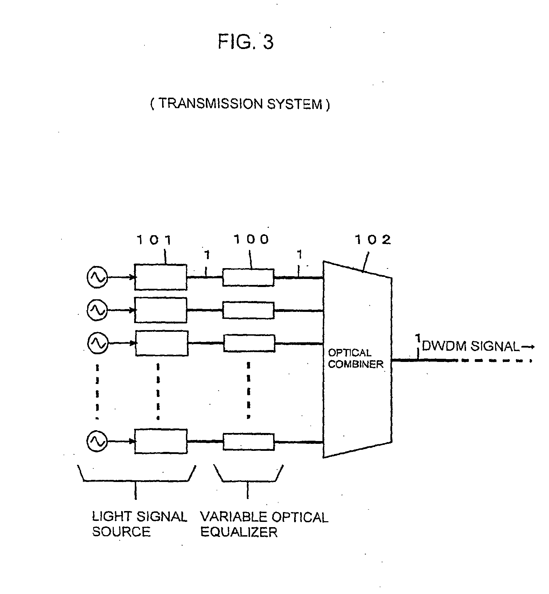

Fig. 3 shows an embodiment of the DWDM transmission system (optical multiplex transmission system) designed to perform flattening compensations for the transmission bands using the variable optical equalizer 100 described above. In the system shown in the diagram, the above variable optical equalizer 100 intervenes between each of a multiplicity of light signal sources 101 each outputting light signals having a different wavelength and an optical combiner 102 for combining outputs of the light signal sources 101 for transmission over a single optical fiber 1. In this case, the variable optical equalizer 100 performs its transmission characteristic compensation on a wavelength-by-wavelength basis. The compensation characteristics thereof are individually set by the polarization rotation angles of the variable Faraday rotators 51 and 52 in each variable optical equalizer 100. Those polarization rotation angles can arbitrarily be set by the direction and/or the strength of the magnetic field as described hereinabove. As a result, the transmission characteristics of a multiplicity of light signals each having a different wavelength can be compensated for simply and at a high accuracy by use of a single type of or a few types of variable optical equalizers 100.

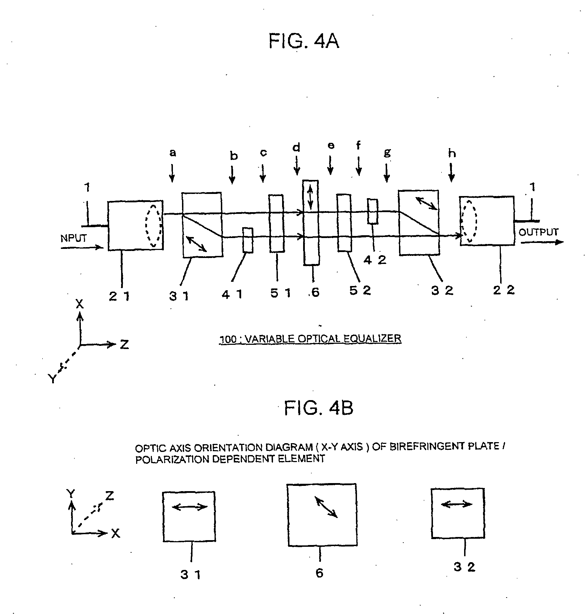

Figs. 4A and 4B show a second embodiment of the variable optical equalizer in accordance with the present invention. In the drawing, Fig. 4A shows the optical configuration, and Fig. 4B shows the optic axis (X-Y axis) orientations of the λ/2 wave plates 41 and 42 and of the polarization dependent element (birefringent plate) 6.

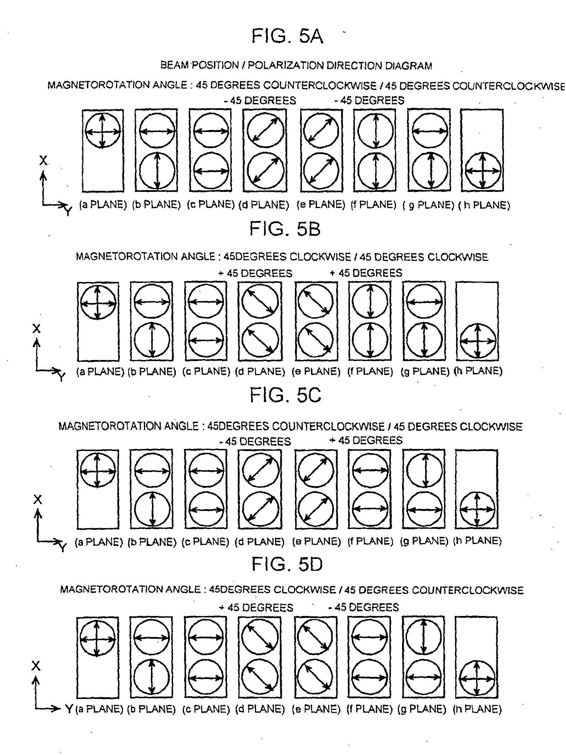

Figs. 5A to 5D show light beam positions and polarization statuses at respective sections (a to h planes) of the optical equalizer shown in Figs. 4A and 4B.

For description, attention will be given to the difference from the first embodiment. In the second embodiment, the λ/2 wave plates 41 and 42 for rotating the polarization directions 90 degrees are allocated respectively to the optic axes of the two light beams. More specifically, the λ/2 wave plate 41 disposed at the input side of the polarization dependent element 6 rotates the polarization direction of one light beam 90 degrees to thereby allow the two light beams passing through the polarization dependent element 6 to have the same polarization directions. On the contrary, the λ/2 wave plate 42 disposed at the output side of the polarization dependent element 6 rotates the other light beam 90 degrees to thereby allow the two light beams to have orthogonal polarization directions. As a result, the same actions and effects as those of the above first embodiment can be obtained. Furthermore, this embodiment can advantageously minimize the polarization-based transmission differences by virtue of the interposition of one λ/2 wave plate 41 in one of the two light beams, with the other λ/2 wave plate 42 in the other.

Although not shown, the λ/2 wave plates may be positioned on the opposite optic axes at the input side and at the output side, respectively, of the polarization dependent element. In other words, as opposed to the second embodiment described above, the λ/2 wave plate disposed at the input side of the polarization dependent element rotates the polarization direction of the other light beam 90 degrees, whilst the λ/2 wave plate disposed at the output side thereof rotates the one light beam 90 degrees. In this case as well, the same actions and effects as those of the second embodiment described above can be obtained.

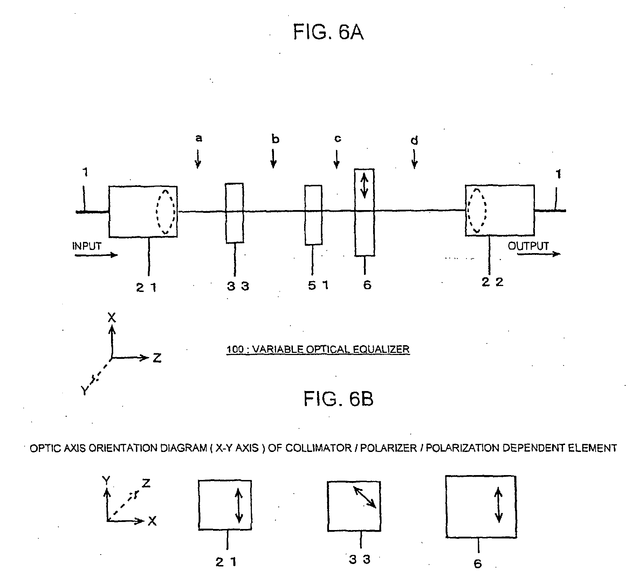

Figs. 6A and 6B show a third embodiment of the variable optical equalizer in accordance with the present invention. In the drawing, Figs. 6A and 6B show respectively the optical configuration and the optic axis (X-Y axis) orientations.

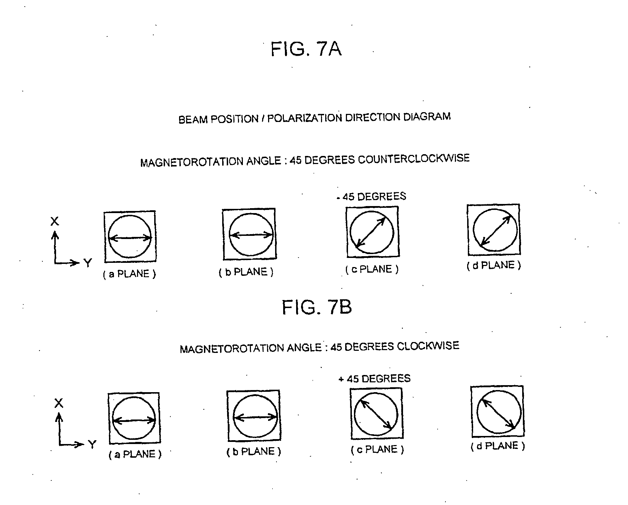

Figs. 7A and 7B show light beam positions and polarization statuses at respective sections (a to d planes) of the optical equalizer shown in Figs. 6A and 6B.

The variable optical equalizer 100 of the third embodiment is of polarization dependent type and is used in an optical transmission system of polarization retaining type in which the signal light transmitted over the optical fiber 1 has a predefined polarization direction. This variable optical equalizer 100 needs neither the process of separating the light beams by polarized wave nor the process of causing the polarization directions to have orthogonal relationships. Hence, a simple configuration becomes possible merely by disposing one by one in series a polarizer 33, the variable Faraday rotator 51 and the polarization dependent element 6 on an optic axis extending between the input-side fiber collimator 21 and the output-side fiber collimator 22.

### INDUSTRIAL APPLICABILITY

As set forth hereinabove, according to the present invention, the variable Faraday rotator(s) and the polarization dependent element are disposed on an optic axis extending between the input-side fiber collimator and the output-side fiber collimator, thereby enabling the transmission characteristics of a multiplicity of light signals each having a different wavelength to be compensated for simply and at a high accuracy by use of a single type of or a few types of variable optical equalizers.

An optical multiplex transmission system having excellent transmission band characteristics can be configured by using the variable optical equalizer of the present invention in the optical multiplexing system combining a multiplicity of light signals each having a different wavelength to transmit the combined signal light via a single optical fiber. The polarizer may be excluded since it merely functions to increase the linearity of beams emitted from the input-side fiber collimator.

## Claims

1. A variable optical equalizer interposed in an optical fiber forming an optical transmission line, comprising:
an input-side fiber collimator which emits in the form of a beam signal light transmitted over the optical fiber;
an output-side fiber collimator which causes the optical fiber to transmit the signal light input in the form of a beam; and
a variable Faraday rotator and a polarization dependent element which are disposed on an optic axis extending between the input-side fiber collimator and the output-side fiber collimator.

2. A variable optical equalizer according to claim 1, further comprising:
a birefringent plate which separates by polarized wave a beam of light emitted from the input-side fiber collimator, into two beams of light;
a λ/2 wave plate which causes the separated two beams of light to have the same direction of polarization for input to the polarization dependent element;
a λ/2 wave plate which causes the direction of polarization of the two beams of light emitted from the polarization dependent element to be orthogonal to each other; and
a birefringent plate which combines the two beams of light whose directions of polarization are caused to be orthogonal to each other, into a single beam of light for input to the output-side fiber collimator.

3. A variable optical equalizer according to claim 1 or 2, wherein the variable Faraday rotator is disposed both at the input and at the output of the polarization dependent element.

4. A variable optical equalizer according to claim 2 or 3, wherein the λ/2 wave plate intervenes in the two beams of light separated by polarized wave.

5. A variable optical equalizer according to any one of claims 1 to 4, wherein the polarization dependent element is a birefringent plate.

6. An optical multiplex transmission system combining a multiplicity of light signals each having a different wavelength, for transmission over a single optical fiber,the optical multiplex transmission system comprising a variable optical equalizer according to any one of claims 1 to 5, for compensating for transmission characteristics of signal light on a wavelength-by-wavelength basis.
